(19) Europäisches Patentamt / European Patent Office / Office européen des brevets

(11) **EP 2 583 419 B1**

(12) **EUROPEAN PATENT SPECIFICATION**

(45) Date of publication and mention
of the grant of the patent:
**06.04.2016 Bulletin 2016/14**

(21) Application number: **10853321.7**

(22) Date of filing: **17.06.2010**

(51) Int Cl.:
*H04L 12/40* (2006.01)      *H04L 12/911* (2013.01)
*H04L 12/28* (2006.01)

(86) International application number:
**PCT/SE2010/050684**

(87) International publication number:
**WO 2011/159210 (22.12.2011 Gazette 2011/51)**

(54) **ETHERNET FOR AVIONICS**

ETHERNET FÜR AVIONIK

ETHERNET POUR AVIONIQUE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**24.04.2013 Bulletin 2013/17**

(73) Proprietor: **Saab AB
581 88 Linköping (SE)**

(72) Inventors:
• **DANIELSSON, Torkel
S-587 29 Linköping (SE)**
• **PETTERSSON, Anders
S-583 37 Linköping (SE)**

• **GRIPSBORN, Anders
S-590 74 Ljungsbro (SE)**
• **HÅKEGÅRD, Jan
S-583 33 Linköping (SE)**

(74) Representative: **Zacco Sweden AB
P.O. Box 5581
114 85 Stockholm (SE)**

(56) References cited:
**EP-A2- 1 841 138        EP-A2- 1 841 138
WO-A1-98/15088        WO-A1-98/15088
US-A1- 2003 115 369        US-A1- 2008 192 772**

EP 2 583 419 B1

**Description**

**Technical field**

The present invention relates to a system and a method for communication networks in avionics.

**Background of the Invention**

In embedded control systems of today, developments in digital technology have enabled complex functionality. However as a direct result from the development, the need of additional system capacity provided by software and various components such as sensors, processors, display units, data buses and memory units is increasing.

Apart from implementing more functionality and interconnectivity in control systems, using less Space Weight and Power, (SWaP) and a reduced number of cabling are further important drivers. Updates of embedded hardware and software during a products life span make adaptability and modularity another interesting design parameter. Other incentives include achieving cost efficient development, production and maintenance, where one possible route is to implement Commercial Off-The-Shelf (COTS) technology instead of expensive specialized technology.

Real-time systems for critical control applications, wherein typically data from sensor/s are acquired, communicated and processed to provide a control signal to at least an actuator pose strict demands regarding bandwidth, data delivery time, redundancy, and integrity. Failure to meet one or several of these demands can in applications including "brake-by-wire" or "steer-by-wire" prove potentially dangerous.

One such area wherein reliable high-speed real-time communication is of outmost importance is within avionics systems. Advances in technology during late 1960 and early 1970 made it necessary to share information between different avionics subsystems in order to reduce the number of functional modules such as Line Replaceable Units (LRU:s). A single sensor such as a position sensor provided information to weapon systems, cockpit display system, autopilot and navigation system. The subsystems communicated with one or several processing units using dedicated standardized avionics communication protocols. Early communication protocol includes the military MIL-STD-1553 and the commercial Aeronautical Radio Inc. (ARINC) 429 standard. ARINC 429 is a simplex point-to-point protocol with limitation in maximum data transmission speed of 100 Kbps and maximum number of connections limited to 20 receivers. In a system with many components requiring access to each other, this easily leads to excessive wiring and thereby increased weight, cost and complexity. MIL-STD-1553 is a protocol wherein the communication is half duplex and asynchronous with a data transmission speed of I Mbps. In an avionics system of today with high bandwidth requirement due to for example video processing resulting from increased use of image generating sensors, bandwidth of earlier protocol can prove insufficient. Avionics Standard Communication Bus (ASCB) by General Aviation Manufacturers Association (GAMA) provides a synchronized network protocol standard providing each component attached to the network a guaranteed amount of bandwidth. The ASCB protocol typically provides a data transmission speed of 10 Mbps.

Recently incentive has been raised within the field of avionics to implement more and more COTS hardware and software to reduce the need of specialized solutions with resulting higher cost.

COTS communication protocol standards that offer high bandwidth include Institute of Electrical and Electronics Engineers (IEEE) 802.3 Ethernet, Universal Serial Bus (USB), IEEE 1394 Firewire, Fibre Channel (FC) developed by the InTernational Committee for Information Technology Standards (INCITS) and Fibre Distributed Data Interface (FDDI). Ethernet have been around for more than 30 years and employed for data transmission applications such as internet access, multi-media, local office networks and other general purpose network solutions. However standard Ethernet was not originally developed with safety critical applications in mind. Transmitted data have no guarantee to arrive at an intended receiver and may thus have to be retransmitted.

Ethernet have recently started to be employed for communication purposes within avionics systems. Standards including ARINC 664 and the closely linked Avionics Full Duplex switched Ethernet (AFDX) presents protocols for communication in avionics using Ethernet. AFDX provides a protocol with a statistically bounded latency where the bandwidth is divided and each sender is provided a guaranteed bandwidth. Despite the latency being bounded by the protocol standard, it is still variable. Dedicated AFDX switches are also required when implementing an AFDX network.

Document US2003/0115369 A1 relates to a computing network using Time Division Multiplexing (TDM) to divide time on a bus into a plurality of frames, each frame having a plurality of time slots. A calibrated frame interval is used to accurately synchronize transmissions of data from the various devices onto the network.

EP 1841138 A2 discloses a method and system for controlling synchronous and asynchronous Ethernet communication in an avionic system. The synchronous messages are allocated to corresponding predetermined time-slots and the asynchronous messages are allocated to the one or more unoccupied portions of the predetermined time-slots.

However, moving from dedicated communication protocols in attempts to reduce costs and increase bandwidth tends to decrease determinism.

Accordingly, there is a need of an improved communication system and method in order to be able to reliably transfer data requiring high bandwidth between various avionics components in real-time.

## Objective of the Invention

It is therefore an objective of the present invention to provide a system and a method, which offer high bandwidth and increased determinism in regard of the data traffic within an avionics communication network.

## Summary of the Invention

This object is achieved according to the present invention by an avionics switched Ethernet network, for communication of data, the network comprising: a plurality of synchronized interconnected system nodes each comprising: an avionics module arranged to periodically provide a set of data messages, each comprising a set of data variables related to avionics functions, a network module coupling the avionics module to the network said network module comprising a network interface unit arranged to provide means for transmissions of data packets comprising a number of said set of data messages from said avionics module. The network module of each system node comprise a transmission control unit arranged to control the network interface unit to perform scheduled transmissions of said data packets, wherein said transmission control unit is provided with access to memory means comprising scheduling information relating to a timing table comprising a plurality of time-slots of predetermined duration within at least one periodically repeating communication time frame, wherein each of said plurality of time-slots is statically allocated a predetermined number of data packets, each comprising a predetermined subset of data messages from said set of data messages, wherein each node is permitted to perform transmissions of one or more packets during that time-slot.

By this is achieved a communication network that is deterministic and is able to bound latency.

The system is in one option further characterized in that the scheduling information is based on determined end-to-end communication delay constraints associated to communication of the data messages between processes allocated to different system nodes (N1-N3)

The system is in one option further characterized in that the scheduling information is determined off-line on basis of communication requirements, determined from execution characteristics of at least one process associated to each of the system nodes, said at least one process arranged to periodically provide at least one data message of said set of data messages.

The system is in one option further characterized in that the avionics module of each system node is arranged to periodically provide data messages of the set of data messages at a plurality of different period times and wherein the duration of each of the at least one communication time frames is preselected based on the shortest period time of the plurality of different period times.

The system is in one option further characterized in that the scheduling information is configured so as to prevent time-slot over-run wherein at least one of the data packets is transported on the network for a plurality of consecutive time-slots.

The system is in one option further characterized in that at least one system node is arranged to transmit synchronization data packets to the other system nodes.

The system is in one option further characterized in that the network comprises a dual redundant switched Ethernet network topology and each of the system nodes are arranged to transmit data packets along two independent paths formed in the network based on a plurality of traffic control means.

The system is in one option further characterized in that the transmission control unit is arranged on top of IEEE 802.3 Ethernet conformant physical layer.

By this is achieved a communication system that is a cost effective by means of the ability to operate using standard Ethernet physical layer components such as for example standard network interfaces, switches and cables.

This objective is also achieved according to the present invention by a method for controlling transmissions in an avionics Ethernet network the method comprising the steps of: providing periodically a set of data messages, each comprising a set of data variables related to avionics functions, transmitting at least one synchronization message onto the transmission medium, detecting the beginning of at least one periodically repeating communication time frame comprising a plurality of time-slots of predetermined duration, based on the at least one synchronization message, perform scheduled transmissions of said data packets, based on scheduling information relating to a timing table statically allocating to each of said plurality of time-slots a predetermined number of data packets, each comprising a predetermined subset of data messages from said set of data messages.

The dependent claims define optional characterizing features corresponding to those described in relation to the system.

This objective is also achieved by a computer programme comprising a programme code for performing the above described method steps, when said computer programme is run on a computer.

This objective is also achieved by a computer programme product comprising a program code stored on a computer readable media for performing the above described method steps, when said computer programme is run on the computer.

This objective is also achieved by a computer programme product directly storable in an internal memory of a computer, comprising a computer programme for performing the above described method steps, when said computer programme is run on the computer.

**Brief Description of the Drawings**

Fig.1. shows schematically a block diagram of the communication system for avionics.

Fig.2. shows schematically a time-slot scheme according to an example of the present invention.

Fig.3. illustrates schematically a time and traffic schedule of the communication system for avionics according to an example of the present invention.

Fig.4. shows schematically a block diagram of the communication system for avionics according to an example of the present invention.

Fig.5. shows schematically a method of communicating according to an example of the present invention.

**Detailed Description**

The following examples relates to the case where a communication system is described with reference to aerial vehicles. However, various different applications are possible, e.g. for use in land, sea or space vehicles.

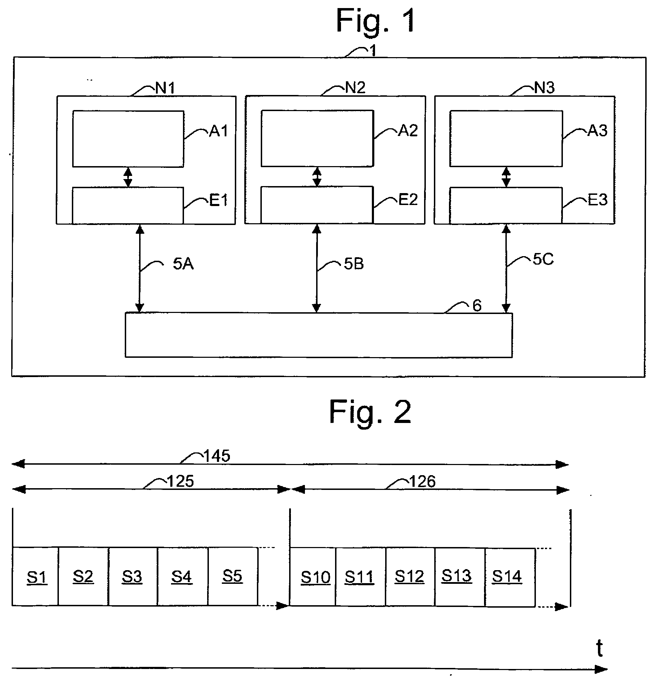

Referring to the drawings, and initially to **Fig. 1,** there is illustrated a block diagram of a communication network **1** in accordance with an example of the present invention. The communication network **1** also referred to in the description as the communication system comprises bidirectional transmission links **5A-5C,** communicatively connecting a plurality of system nodes **N1-N3**, via a switch **6.** The communication network 1 is configured to provide means for communication of data packets comprising units of data arranged in data messages between the system nodes **N1-N3**. The communication network **1** is based on standard Ethernet physical layer conformant with IEEE 802.3, such as for example 100 BASE-TX and/or 1000 BASE-T or the like. Each system node **N1-N3** comprises an avionics processing component **A1-A3** coupled to a network component **E1-E3**. Each of the avionics processing components **A1-A3** may be a line replaceable unit (LRU). A LRU describes units such as for example a flight control computer (FCC), an integrated modular avionics (IMA) unit, a display computer, an autopilot or the like. Each of the network components **E1-E3** is arranged to perform one or more operations related to timing, data conversion, message encapsulation, message de-capsulation, data transmission and data reception. The network components **E1-E3** of each system node **N1-N3** may for example be coupled to via an internal bus structure associated to the avionics processing components **A1-A3** such as for example a PCI, PCIe, IDE or the like in order to perform read and or write operations regarding units of data stored in one or more memory components associated to the avionics processing component **A1-A3**. The data messages may each comprise one or more units of data also referred to as variables, related to for example, a sensor reading, a periodically calculated output value of a control loop or the like. A data packet may be forwarded in the network from one or a plurality of sending nodes to one or a plurality of designated receiving nodes. Each of the nodes **N1-N3** may interchangeably send and receive data packets. Access to the network **1** is restricted for each node **N1**-N3 on basis of a time triggered media access protocol. This means that each node **N1-N3** is permitted to perform transmissions of one or more data packets during a particular allocated period of time i.e. time-slot.

Each of the data message intended to be transmitted from each of the system nodes **N1-N3** is encapsulated before transmission into one or more Ethernet data packet. The data packet may comprise a header field, an application data field and a fault detection field. The header field may be provided with information related to identification of sending node and receiving node. The application data field may be provided with application data from the sending node such as for example message data comprising the result of a calculated control loop. The fault detection field may be provided with error correcting code (ECC) and/or checksum.

In one example to indicate what particular data message is being transmitted and received, User Datagram Protocol (UDP) port numbers may be used to identify each data message and where to place the units of data provided in each of said data message. Hence, the network component **E1-E3** of each system node **N1-N3** may use the UDP port numbers to identify the correct place i.e. memory address to perform read and/or write operations regarding data messages and associated one or more units of data stored in one or more memory components associated to the avionics processing component **A1-A3**

In one example the data packets may be transmitted from each of the system node **N1-N3** using point-to-multipoint communication i.e. multicast, referring to sending data packets to a group of system nodes. As an example system node **N1** may be arranged to multicast data packets to a system group comprising the system nodes **N2** and **N3.**

The switch **6** is in one example a standard Ethernet switch comprising a plurality of data ports. The switch **6** may comprise a processor, a plurality of input and output ports each associated with one of the system nodes **N1-N3.** Upon reception of the data messages the switch **6** may be arranged to store the received data messages in one or more input buffer memory devices. The processor of the switch **6** may be arranged to route the received data messages from the input buffer memory devices to output buffer memory device associated with one or more designated receiving system node **N1-N3.** The designated one or more receiving system nodes may be read by the switch by means of destination addresses encapsulated by the sending node in each of the data packets. The addresses may be Media Access Control (MAC) addresses, defining one address for each transmission link **5A-5C** coupling the system nodes **N1-N3** to the switch **6.** The switch **6** may then be able to correctly identify the designated one or more receivers of each data packet by means of indentifying the address in a static lookup table provided in an internal memory of the switch **6.** The lookup table may then provide the correct one or more output ports to route the received data to. Configuration of the switch **6** may be performed by uploading a new version of the lookup table to the internal memory of the switch **6.**

In the illustrated example with reference to **fig. 1** the communication system comprises three system nodes **N1-N3** and one switch 6, however other examples may comprise a number of additional system nodes and/or switches connected with standard Ethernet links.

In one example the time triggered media access protocol may be implemented in the network component **E1-E3** of each system node **N1-N3.** Each system node **N1-N3** may transmit data packets simultaneously onto the network in accordance with the time triggered media access protocol. Each member of the communication network i.e. system nodes **N1-N3** may be pre-assigned to predetermined points in time i.e. when it should transmit data packets and further points in time when it can expect to receive data packets. The predetermined points in time may be detected and maintained by software arranged in each of the system nodes **N1-N3** such as for example by a driver associated to a programmable interrupt timer. To be able to execute the time triggered schedule each of the system nodes may be arranged to maintain time by means of local hardware and/or software time keeping devices or a combination thereof.

With reference to **fig. 2** the time triggered media access protocol may be defined by a cyclic i.e. repeating schedule comprising a major communication cycle **145,** comprising a set of minor communication cycles **125, 126** each comprising a number of time-slots **S1-S5, S10-S14** of predetermined duration. At detection of the start of a time-slot, each system node may be arranged to transmit its allocated one or more data packets one after another.

As an example each time period such as for example each 1 second time period may be configured to be divided into 20 equally sized 50 ms time-slots. The major cycle may comprise a number of minor cycles i.e. sets of said configured 50 ms time-slots. In case the major cycle comprise three minor cycles then corresponding major cycle is 3 seconds long. After the major cycle is completed it may be repeated indefinitely or until shutdown of system.

In one example each system node **N1-N3** may be provided with a fixed traffic schedule. The fixed traffic schedule may comprise one or more tables of entries associating each of the time-slots with one or more corresponding data messages to transmit in at least one data packet.

The fixed i.e. preconfigured traffic schedule may in one example be stored on a memory portion of a memory associated to the network module of each of the respective system nodes. Each of the system nodes **N1-N3** connected to the network may by means of the fixed traffic schedule statically be allocated zero or more packets to transmit in each time-slot of a series of subsequent time-slots in accordance with the time triggered media access protocol. Hence, at each instant of time the traffic of data packets is known to all system nodes.

In one example the fixed traffic schedule may be determined on basis of the communication requirement of each system node **N1-N3.** Each system node may be arranged to periodically perform one or more functions associated with various avionics systems such as for example calculating one or more control loops. Each function of each of the system nodes **N1-N3** may be divided into a set of periodic tasks also referred to as processes. Each task may be defined by a set of characteristics with respect to timing. Each task may require a specific number of processor cycles constituting an execution time (ET). Each task may further be defined by a worst case execution time (WCET) wherein said WCET is generally longer than the ET based on the actual physical processing including operations such as for example task release, start, preemption, resume, completion and termination. One or more of the periodic task may further be dependent on one or more units of data provided by one or more other tasks which is arranged to execute on different avionics processing components **A1-A3.** These one or more periodic tasks need to be scheduled regarding communication of data on the communication network **1.**

In one example one or more associated data messages provided from each periodic task may be determined to be scheduled for communication in one or more data packets to be transmitted on the network 1 in a specific time-slot based on the associated execution period of each of the tasks. As an example each task may arranged to communicate at a periodic basis with respect to the period associated to each task.

In one example each of the periodic tasks one or more associated data messages provided from each periodic task may be determined to be scheduled for communication in one or more data packets to be transmitted on the network 1 in a specific time-slot based on the associated execution period of each of the tasks and communication delay constraints associated to each of the tasks. The communication delay constraints may be imposed on each task by means of one or more tasks being dependent on units of data provided as communication between several tasks. As an example a first task executing on a first system node **N1** may be arranged to transmit one or more associated data messages comprising one or more units of data in one or more time-slots, such that the one or more units of data provided by the first task is available for processing by a second task executing periodically on a second system node **N2** before a scheduled release time of said second task.

In one example each task arranged to provide units of data associated to data messages may be pre-assigned a task execution period time selected from a set of system global task periods. Hence, communication by means of the network **1** between a plurality of system nodes and tasks executing on said system nodes may be co-scheduled based on period time, WCET and delay constraints associated to each of the tasks. In order to provide means for periodic communication of data messages provided from each task the minor communication time frame may be adapted to correspond to the shortest task period time of the set of system global task periods.

In one example the size of each data message is considered with respect to the available bandwidth of the network **1** when determining the allocation of data messages to be transmitted in time-slots of the fixed traffic schedule.

Worst case transmission time WCT need to be considered when determining the fixed traffic schedule. The WCT may be referred to as the time from when a particular unit of data is produced by completion of an instance from a first task and is ready for transport until the time when the particular unit of data has been transported and is ready for processing by an instance of a second task. The actual transmission time may vary from time to time based on variation in the arrival or departure times referred to as jitter caused by switches, input/output processing and configuration of physical transmission medium etc. Parameters that may affect the WCT may for example include type and length of cabling along the respective intended data packet routing and the policy and performance of the switch regarding memory access, the amount of data traffic and processing power. The WCT may be determined according to the following equation.

$$WCT = S_P + P_{R1} + S_w + P_{R2} + R_P$$

Wherein $S_P$ denotes time it takes for the respective system node **N1**-**N3** to process operations related to transmission of data messages, wherein $P_{R1}$, and $P_{R2}$ denotes propagation delay inflicted by transmitting electrical signals corresponding to data packets along cables to and from the switch. $S_w$ denotes delay inflicted by queuing and routing the data packets in the switch. $R_P$ is the time it takes for the respective system node **N1**-**N3** to process operations related to receiving data packets and retrieving data messages from said data packets.

In one example the fixed traffic schedule may be determined based on preventing time-slot over-run wherein a data message is transported on the network 1 for a plurality of consecutive time-slots. By the use of the condition the design of the communication system is able to bound worst case transmission delay.

By considering the communication requirements of the each of the respective system nodes and the physical properties of the communication network **1** the time triggered traffic schedule may be determined off-line.

The specific time triggered traffic schedule may be determined by hand or by means of scheduling software executed on a computer. After the time triggered traffic schedule is determined it may subsequently be transformed into instructions readable by a computer such as for example compiled into a binary format.

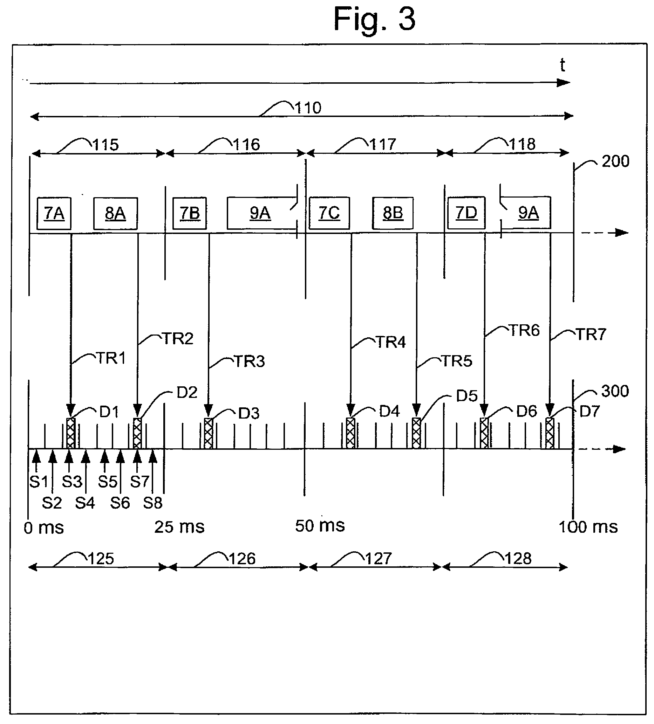

For purpose of illustration with reference to **fig. 3** a first system node **N1** may be arranged to periodically execute instances of a first task **7A-7D,** instances of a second periodic task **8A-8B** and instances of a third periodic task **9A** according to a cyclic execution schedule **200** defined by a major execution cycle **110** comprising a number of minor execution cycles **115-118.** A second node **N2** may be arranged to execute a first set of tasks being dependent on units of data provided by the instances of the first **7A-7D** and second task **8A-8B.** The instances of the first task **7A-7D** may be arranged to produce an output i.e. units of data corresponding to "positional data" on a 40 Hz basis from using information provided by an inertial measurement unit IMU. The instances of the second periodic task **8A-8B** may be arranged to produce an output corresponding to a "position report message" on a 20 Hz basis. The instances of the third periodic task **9A** may be arranged to produce an output corresponding to a "distance to closest obstacle" on a 10 Hz.

Each instance of the first, second and third tasks may for example be defined by the following characteristics regarding worst case execution time WCET, worst case transmission time WCT and task frequency as illustrated by Table 1.

TABLE 1

| Task | Frequency | Period | WCET | WCT |
|------|-----------|--------|------|-----|
| First | 40 Hz | 25 ms | 5 ms | N1-N2 6 ms |
| Second | 20 Hz | 50 ms | 6 ms | N1-N2 6 ms |
| Third | 10 Hz | 100 ms | 25 ms | N1-N2 6 ms |

Tasks associated to each of the respective first and second system nodes **N1-N2** in the example may be arranged to synchronously execute in priority order based on task frequency i.e. task period in accordance with execution schedules such as for example execution schedule **200** comprising a major cycle **110** and a number of minor cycles **115-118.** The instance of the first task **7A-7D** may be arranged to execute first in order each 25 ms time period. The instances of the second task **8A-8B** may be arranged to execute second in order in each 50 ms period and the instances of the third task **9A** may be arrange to execute third in order in each 100 ms period. The instances of the third task **9A** may be preempted during a second minor cycle **116** and resumed in a fourth minor cycle **118** due to its associated WCET risk exceeding its allocated execution time as defined by schedule **200.** To construct a corresponding preconfigured traffic schedule **300** each of the minor execution cycles **125-128** of the execution schedule **200** may be divided into a number of time-slots **S1-S8** each corresponding to a predetermined time period. In the shown example the time period each of the minor execution cycles are divided into eight time-slots **S1-S8** each corresponding to a time period of 3.125 ms.

Each of the units of data i.e. output results from processing instances of the first, second and third task may be scheduled for transmission **TR1-TR7** in one or more data packets **D1-D7** in one or more corresponding time-slot **S1-S8** associated to one or more of the minor communication cycles **125-128.** The transmissions **TR1-TR7** may be scheduled based on time of completion of the task performed by a system node **N1-N2** and based on points in time relating to when a particular data message comprising one or more units of data i.e. particular output results of said task is needed by one or several other tasks and/or other systems coupled to the communication network 1. Additional factors that may be considered is the amount of time $S_p$ needed for process operations related to transmission of data messages in a transmitting node.

The WCT from the first node **N1** to the second node **N2** may be determined to be 6 ms. Delay constraints for transmission of units of data from instances of the first and second task may be determined to be that the units of data from all transmitted data messages need to be ready for processing in the one or more receiving system nodes no later than at the end of the period wherein which the unit of data is provided. A first transmission **TR1** may represent a first transmission of output data from a first instance of the first task **7A** via the network **1** to one or more of the second. The first transmission **TR1** may be scheduled in one or more of the time-slots starting from the first upcoming time-slot after its time of completion. However to fulfill the condition of tasks associated to the second node being dependant on one or more output values from a previous execution period associated to the task providing the units of data the worst case transmission time to the second node needs to be considered when scheduling the first transmission **TR1.** Transmissions from instances of the first task **7A-7D** may then accordingly be scheduled into any time-slot ranging from a third time-slot **S3** to a sixth time slot **S6** of each minor communication cycle **125-128,** such as for example in the third time-slot **S3** of each the minor communication cycles **125-128,** corresponding to four periodic transmissions illustrated in **fig. 3** as first, third, fourth and sixth transmission **TR1, TR3, TR4** and **TR6.** A second transmission **TR2** may represent a transmission of output data from instances of the second task **8A-8B** to the second node. The constraint for the second transmission **TR2** may be determined from the WCET, period time associated to instances of said second task and the WCT to the second node. Accordingly, the second transmission **TR2** may be scheduled into any time-slot ranging from a seventh time-slot **S7** of the first minor cycle **125** until a sixth time-slot **S6** of a second minor cycle **126,** such as for example in the seventh time-slot of the first minor communication cycle **125.** Subsequently a fifth transmission **TR5** may be scheduled in the seventh time-slot **S7** in the third minor cycle **127.** Note that there is no constraint presented for the illustrated seventh transmission **TR7** representative of a transmission of a data message comprising an output value form an instance of the third task **9A.**

The corresponding preconfigured traffic i.e. communication schedule **300** may be repeated indefinitely in synchronicity with the task execution schedule **200.**

In one example the first time-slot S1 of each minor cycle **115-118** in the communication schedule **300** may be assigned to a synchronization data packet. The last time-slot **S8** in each of the minor cycles **115-118** may be configured as a "dead band" also referred to as a refusal window in order to provide separation between subsequent minor cycles **115-118.**

It should be understood that the communication system with reference to the above example including three tasks, each described with a specific timing requirements may be configured differently. Differences may include that the number of tasks differ, each of the tasks may transmit more than one data message and the tasks may be dependent on more than one different task or other system connected to the communication network **1.**

In one example a common time reference also referred to as local avionics system time (AST) is provided. To be able to effectively implement the time triggered media access protocol, restricting the access to the transmission medium it is important that all nodes **N1-N3** in the communication system **1** have one and the same view of time. To maintain substantially the same view of system time among the system nodes, a synchronization protocol may be implemented in the system.

In one example synchronization data packets indicating the start of the minor cycle are sent on a cyclic basis from a master node, such as from a flight management computer (FCC) configured for flight safety critical operations. The synchronization data packets are received by the system nodes whereby each receiving node can use the synchronization packet to detect if is out of sync and respond by re-synchronizing its respective local clock.

The master node may in one example be provided with a high quality time keeping device such as a high quality crystal oscillator, or be synchronized to external high quality time keeping devices such as by means of receiving Pulse per Second (PPS) signals from atomic clocks featured in Global Positioning Systems (GPS). The latter may be beneficial in case the communication system involves system nodes that perform calculations involving positioning or other calculations that are performed on basis of an external global time value, such as Greenwich Mean Time (GMT).

In one example the system nodes may be synchronized in time using the IEEE 1588, standard for a precision clock synchronization protocol for networked measurement and control systems.

In one example the system nodes may be arranged to operate on basis of a fail silent protocol. The fail silent protocol is based on that only system nodes that are substantially synchronized in time i.e. within a tolerance level in respect of the AST may be arranged to transmit data packets. As soon as each of the system nodes is able to resynchronize, the respective system nodes may be allowed to transmit its data packets according to the schedule. This means that effects of local clock jitter, drift or effects resulting from a system startup procedure of each system node may not affect transmitting packets being out of sync with respect to the predefined schedule.

In one example the handling of input/output (I/O) processes in correspondence to the preconfigured traffic schedule may within each system node **N1-N3** be performed by partitioned software executed on an IMA computer.

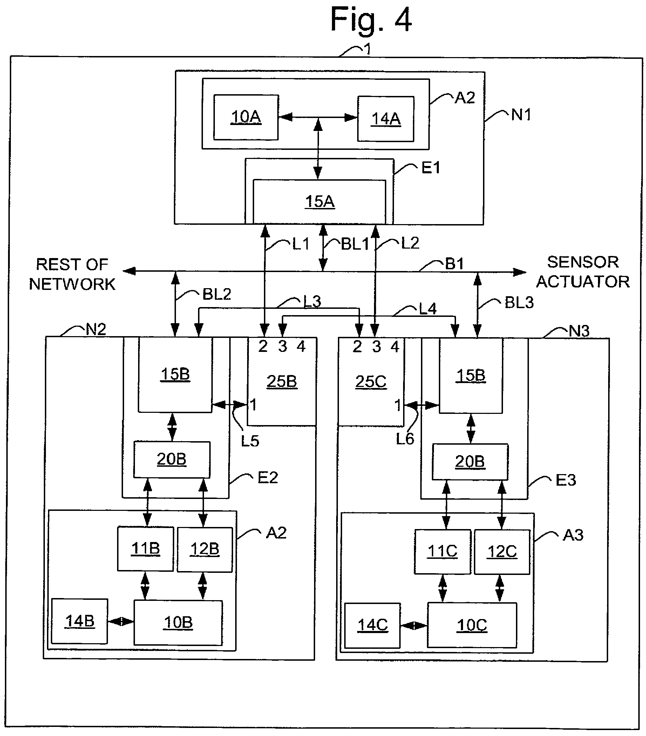

In one example the communication system with reference to **Fig. 4** comprise three system nodes **N1-N3** arranged in communicative operation by means of a plurality of Ethernet links **L1-L6** in a dual redundant configuration comprising two switches **25B** and **25C**. Each of the two switches **25B** and **25C** comprises four ports **1-4.** The avionics component **A1-A3** of each of the system nodes comprises a processor **10A-10C** arranged to process one or more associated tasks in order to produce one or more data messages. Each of the processors of the avionics processing components is coupled to a program memory **14A-14C** comprising processing instructions for executing said associated tasks. The processor of the second **N2** and third N3 avionics component **A1-A3** is further coupled to an input memory **11B-11C** and an output memory **12B-12C** to provide means for communication of said data messages. The system nodes **N1-N3** comprise a network interface **15A-15C** comprising an Ethernet socket and an Ethernet controller arranged to provide means for transmissions of data messages in one or more Ethernet data packets. The network interface **15A-15C** of each system node may further comprise additional sockets and controllers to allow to be coupled to at least a secondary bus **B1** by means of bus links **BL1-BL3.** The secondary bus **B1** may be a MIL-STD-1553 bus providing connections to other parts of the network such as additional system nodes, sensors and/or actuators. The second and third of the system nodes **N2, N3** are provided with an I/O data processor (IOP) **20B, 20C.** The IOP **20B, 20C** of the at least one system node may be arranged to be in operative connection with a portion of a memory comprising information relating to the preconfigured traffic data schedule. The IOP **20B, 20C** of the at least one system node is arranged to be in operative connection with one or more input **11B-11C** and/or output **12B-12C** memory associated to data messages provided from tasks. The IOP **20B, 20C** may be arranged to control all incoming and outgoing data transmissions from a system node **N1-N3** based on the preconfigured traffic schedule. The IOP **20B, 20C** may for example be arranged to implement timer services, such as for example periodic interrupts to trigger timed operations of the network interface **15A-15C** in accordance with the preconfigured traffic schedule in providing units of data associated to one or more data messages from one or more portions of the associated output memory **12B-12C** to the network. The IOP **20B, 20C** of each system node **N1-N3** may further for example be arranged to implement timer services to trigger timed operations in accordance with the preconfigured traffic schedule in providing data received from the network to one or more portions of the associated input memory **12B-12C.** The timer services associated to several system nodes may be synchronized based on the synchronization data packets. The first system node **N1** is arranged to perform control of its associated network interface **15A** such as for example by means of an input/output software module stored in the program memory **14A** and scheduled to execute periodically on its associated avionics processing component **A1.** The input/output software module is further arranged to operate in accordance with the preconfigured traffic schedule.

It should be understood that the example with reference to **fig. 4** may be configured differently regarding the associated switches, memory configuration and processors. For example each avionics processing component **A1-A3** may comprise an associated IOP or alternatively several avionics processing components **A1-A3** may share access to a single IOP.

In one example one or more of the system nodes **N1-N3** may be configured to execute a partitioning operative system (OS), such as for example an OS compliant with the commercial Aeronautical Radio Inc. (ARINC) 653 specifications. This enables different applications to execute on separate partitions of a single processor, where the execution of each application is partitioned regarding execution time and memory space. Each process may be assigned a process execution frequency, whereupon the process is periodically executed. Each task or set of task may be associated to communication ports referred to as sampling port or queuing ports for communication of data messages comprising units of data.

In one example with further reference to **fig**. **3** the communication system is based on two parallel identical networks including the two switches **25B, 25C** and the Ethernet links, providing two independent communication channels between each of the system nodes. Each data packet transmitted from a sending node may be transmitted substantially in parallel on both channels. As an example the first system node **N1** may be arranged to transmit its data packets to both channels. The network interface **15C** of the third node then receives the data packets both via a first communication channel **15A-L1-25B-L4-25C** and via a second communication channel **15A-L2-25C-L6.** This means that each receiving node receives two copies of each transmitted data packet. The receiving node may be provided with a filtering device arranged to filter out copies of the received data packets.

In one example the sending node may be arranged to provide a sequence marking on the data packet before transmitting the data packet on the network. By providing each subsequent transmitted data packet with an incrementing sequence number the filtering device may be arranged to filter out copies by detecting non-incrementing sequence number of the received data packets. To reduce the number of bits in a packet necessary for the sequence number the incrementing sequence number can be subjected to a roll over at a predetermined sequence number.

In one example the filtering device may be arranged to filter out copies of the data packets on basis of detecting time of arrival. The filter may then be arranged to filter out the copy by discarding the data packet with the longer arrival time.

All data packets may be provided with a checksum at the sending node such as cyclic redundancy check (CRC) and/or other error correcting code ECC. The checksum can be verified at a receiving node to control integrity of the received data.

In one example the system nodes **N1-N3** may each comprise a non-volatile memory, a data processing device such as a microprocessor and a read/write memory. The non-volatile memory has a first memory portion wherein a computer program, such as an operating system, is stored for controlling the function of the communication network **1.** Further, the system nodes **N1**-**N3** comprises a bus controller, a serial communication port, I/O-means, an A/D-converter, a time date entry and transmission unit, an event counter and an interrupt controller. The non-volatile memory also has a second memory portion.

A computer program comprising routines controlling transmissions in an avionics Ethernet communication network 1 is provided. The program may be stored in an executable manner or in a compressed state in a separate memory and/or in the read/write memory.

When it is stated that the data processing device performs a certain function it should be understood that the data processing device performs a certain part of the program which is stored in separate memory, or a certain part of the program which is stored in read/write memory.

The data processing device may communicate with a data port by means of a first data bus. The non-volatile memory is adapted for communication with the data processing device via a second data bus. The separate memory is adapted to communicate with data processing device via a third data bus. The read/write memory is adapted to communicate with the data processing device via a fourth data bus.

When data is received on the data port it is temporarily stored in the second memory portion. When the received input data has been temporarily stored, the data processing device is set up to perform execution of code in a manner described above. According to one example, data received on the data port comprises information regarding the detected time-slot and corresponding one or more specific data packets to transmit as determined from the preconfigured time triggered traffic schedule. This information can be used by the system nodes so as to control transmissions in an avionics Ethernet communication network, as described above.

One example of the invention relates to a computer programme comprising a programme code for performing the method steps depicted with reference to **fig**. **5,** when the computer programme is run on a computer.

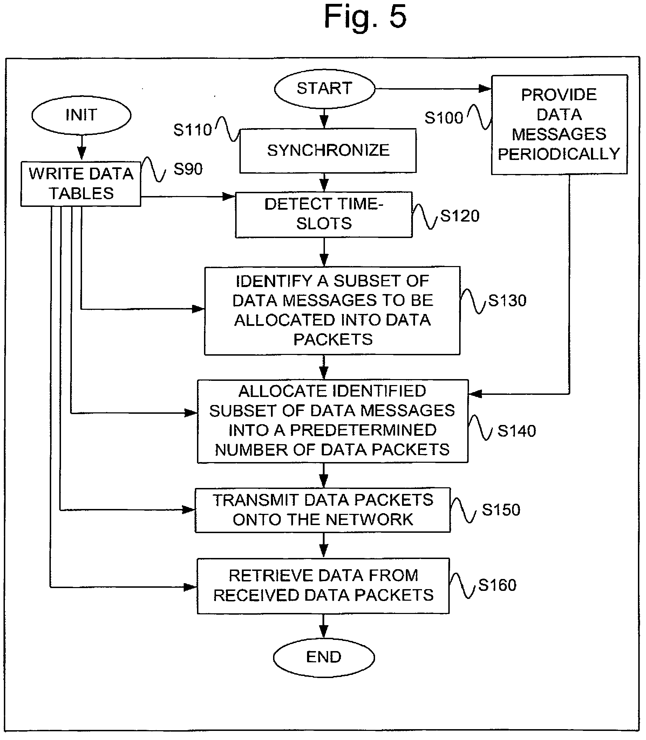

One example of the invention relates to a computer programme product comprising a program code stored on computer-readable media for performing the method steps depicted with reference to **fig. 5,** when the computer programme is run on the computer.

One example of the invention relates to a computer programme product directly storable in an internal memory of a computer, comprising a computer programme for performing the method steps depicted with reference to fig. **5,** when the computer programme is run on the computer.

**Fig.** 5 schematically illustrates a flow diagram of a method according to an example of the present invention. This example relates to controlling transmissions of data messages from system nodes in the avionics Ethernet network **1.**

In a first method step **S90** associated to system initialization writing data tables is performed i.e. writing the preconfigured traffic schedule to the memory associated to the processor arranged to handle the input and output processing in each of the system nodes **N1-N3.** The first method step is generally only performed once in response to system modifications. After the method step **S90** a subsequent method step **S100** is performed.

In the method step **S100** a set of data messages are provided by each of the system nodes. This means that each system nodes processes one or more periodic tasks resulting in that one or more data messages are provided periodically, each comprising one or more units of data. After the method step **S100** a subsequent method step **S110** is performed

In the method step **S110** synchronization of the system nodes is performed. This means that a synchronization message is transmitted onto the network arranged to provide synchronization information to the system nodes. After the method step **S110** a subsequent method step **S120** is performed.

In the method step **S120** a plurality of time-slots within at least one communication time frame are detected, i.e. each system node detects the beginning of an upcoming time-slot by determining if the elapsed time period since the prior time-slot was detected, corresponds to a predetermined value in the preconfigured traffic schedule or by determining if the elapsed time since a synchronization data message was received at the initialisation process corresponds to a predetermined value in the preconfigured traffic schedule. After the method step **S120** a subsequent method step **S130** is performed.

In the method step **S130** a subset of data messages of the set of data messages provided by each system node to transmit in the detected time-slot is determined. Each detected time-slot corresponds to a point in time indicating a permission to transmit a predetermined subset of data messages as indicated by one or more entries in the data tables i.e. preconfigured traffic schedule.

In the method step **S140** the subset of data messages determined to be transmitted in the time-slot is encapsulated into one or more Ethernet data packets. After the method step **S140** a subsequent method step **S150** is performed in the illustrated example.

In the method step **S150** each of the system nodes **N1-N3** transmit its one or more allocated Ethernet data packets. After the method step **S150** a subsequent method step **S160** is performed in the illustrated example.

In the method step **s160** data from received Ethernet data packets is retrieved. Each system node may determine which data messages of which received Ethernet data packets to forward to the a particular memory address of the system node on basis of one or more entries in the preconfigured traffic schedule and data message identification information embedded in the Ethernet data packet. After the method step **S160** the method ends and may be repeated starting with the method step **S100** to perform a new controlled data transmission.

Many modifications and variations will be apparent to practitioners skilled in the art without departing from the scope of the invention as defined in the appended claims. The examples were chosen and described in order to best explain the principles of the invention and its practical applications, thereby enabling others skilled in the art to understand the invention for various examples and with various modifications as suited to the particular use contemplated.

**Claims**

1. An avionics switched Ethernet network (1), for communication of data, the network comprising:

 - a plurality of synchronized interconnected system nodes (N1-N3) each comprising:
 - an avionics module (A1-A3) arranged to periodically provide a set of data messages, each comprising a set of data variables related to avionics functions,
 - a network module (E1-E3) coupling the avionics module (A1-A3) to the network (1), said network module (E1-E3) comprising a network interface unit (15A-15C) arranged to provide means for transmissions of data packets comprising a number of said set of data messages from said avionics module (A1-A3),

 wherein the network module (E1-E3) of each system node (N1-N3) comprise a transmission control unit arranged to control the network interface unit (15A-15C) to perform scheduled transmissions of said data packets, wherein said transmission control unit is provided with access to memory means comprising scheduling information relating to a timing table comprising a plurality of time-slots (S1-S8) of predetermined duration within at least one periodically repeating communication time frame (125-128), **characterized in that** each of said plurality of time-slots (S1-S8) is statically allocated a predetermined number of data packets, each comprising a predetermined subset of data messages from said set of data messages, wherein each node (N1-N3) is permitted to perform transmissions of one or more data packets during that time-slot.

2. The network (1) according to claim 1, wherein the scheduling information is based on determined end-to-end communication delay constraints associated to communication of the data messages between processes allocated to different system nodes (N1-N3).

3. The network (1) according to claim 1 or 2, wherein the scheduling information is determined off-line on basis of communication requirements, determined from execution characteristics of at least one process (7A-7D, 8A-8B, 9A) associated to each of the system nodes (N1-N3), said at least one process (7A-7D, 8A-8B, 9A) arranged to periodically provide at least one data message of said set of data messages.

4. The network (1) according to claim 3, wherein the avionics module (A1-A3) of each system node (N1-N3) is arranged to periodically provide data messages of the set of data messages at a plurality of different period times and wherein the duration of each of the at least one communication time frames is preselected based on the shortest period time of the plurality of different period times.

5. The network according to claim 1-4, wherein the scheduling information is configured so as to prevent time-slot over-run wherein at least one of the data packets is transported on the network for a plurality of consecutive time-slots.

6. The network (1) according to claim any of claims 1-5, wherein at least one system node (N1-N3) is arranged to transmit synchronization data packets to the other system nodes (N1-N3).

7. The network (1) according to any of claims 1-6, wherein the network (1) comprises a dual redundant switched Ethernet network topology and each of the system nodes (N1-N3) are arranged to transmit data packets along two independent paths formed in the network (1) based on a plurality of traffic control means (SW2, SW3).

8. The network (1) according to any of claims 1-7, wherein the transmission control unit (20B, 20C) is arranged on top of IEEE 802.3 Ethernet conformant physical layer.

9. A method for controlling transmissions in an avionics Ethernet network (1), the method comprising the steps of:

   - providing periodically a set of data messages, each comprising a set of data variables related to avionics functions,
   - transmitting at least one synchronization message onto the transmission medium,
   - detecting the beginning of at least one periodically repeating communication time frame comprising a plurality of time-slots of predetermined duration, based on the at least one synchronization message,

   **characterized by** the further steps of in each system node (N1-N3) to:

   - perform scheduled transmissions of said data packets, based on scheduling information relating to a timing table statically allocating to each of said plurality of time-slots (S1-S8) a predetermined number of data packets, each comprising a predetermined subset of data messages from said set of data messages, wherein each node (N1-N3) is permitted to perform transmissions of one or more data packets during that time-slot.

10. The method according to claim 9, **characterized by** the step of in each system node (N1-N3) to:

    - perform scheduled retrieval of the data packets based on scheduling information relating to a timing table statically allocating to each of said plurality of time-slots (S1-S8) a predetermined number of data packets, each comprising a predetermined subset of data messages from said set of data messages.

11. The method according to claim 10, **characterized by** the further step of in each system node (N1-N3) to:

    - transmit the data packets along two independent paths formed in the network (1), based on a plurality of traffic control means (SW2, SW3).

12. The method according to claim 11, **characterized by** the step of in each system node (N1-N3) to:

    - filter the data packets received via the two independent paths in order to retrieve one correct copy of each of the data packets.

13. A computer programme comprising a programme code for performing the method steps of any of claims 9-12, when said computer programme is run on a computer.

14. A computer program product stored on a computer readable media for performing the method steps of any of claims 9-12, when the computer program is run on the computer.

15. A computer program product directly storable in an internal memory of a computer, comprising a computer program for performing the method steps of any of claims 9-12, when the computer program is run in the computer.

**Patentansprüche**

1. Geschaltetes Ethernet-Netzwerk (1) für Avionik, für die Übermittlung von Daten, wobei das Netzwerk umfasst:

   - eine Vielzahl synchronisierter, miteinander verbundener Systemknoten (N1-N3), die jeweils umfassen:
   - ein Avionikmodul (A1-A3), das dazu eingerichtet ist, periodisch einen Satz von Datennachrichten bereitzustellen, die jeweils einen Satz von Datenvariablen umfassen, die sich auf Avionikfunktionen beziehen, und
   - ein Netzwerkmodul (E1-E3), das das Avionikmodul (A1-A3) mit dem Netzwerk (1) koppelt, wobei das Netzwerkmodul (E1-E3) eine Netzwerkschnittstelleneinheit (15A-15C) umfasst, die dazu eingerichtet ist, eine Einrichtung für die Sendung von Datenpaketen bereitzustellen, die eine Anzahl des Satzes von Datennachrichten aus dem Avionikmodul (A1-A3) umfassen,

   wobei das Netzwerkmodul (E1-E3) jedes Systemknotens (N1-N3) eine Sendesteuereinheit umfasst, die dazu eingerichtet ist, die Netzwerkschnittstelleneinheit (15A-15C) derart zu steuern, dass sie zeitlich geplante Sendungen der Datenpakete ausführt, wobei die Sendesteuereinheit mit einem Zugang zu der Speichereinrichtung versehen ist, die Zeitplanungsinformationen umfasst, die sich auf eine Zeitgabetabelle beziehen, die eine Vielzahl von Zeitschlitzen (S1-S8) einer vorbestimmten Dauer innerhalb wenigstens eines sich periodisch wiederholenden Übermittlungszeitrahmens (125-128) umfassen,
   **dadurch gekennzeichnet, dass** jedem aus der Vielzahl von Zeitschlitzen (S1-S8) eine vorbestimmte Zahl von Datenpaketen statistisch zugeordnet ist, die jeweils einen vorbestimmten Teilsatz von Datennachrichten aus dem Satz von Datennachrichten umfassen, wobei es jedem Knoten (N1-N3) gestattet ist, Sendungen eines oder mehrerer Datenpakete während dieses Zeitschlitzes auszuführen.

2. Netzwerk (1) nach Anspruch 1, bei dem die Zeitplanungsinformationen auf bestimmten End-to-End-Übermittlungsverzögerungsbeschränkungen basieren, die mit der Übermittlung der Datennachrichten zwischen Prozessen assoziiert sind, die unterschiedlichen Systemknoten (N1-N3) zugeteilt sind.

3. Netzwerk (1) nach Anspruch 1 oder 2, bei dem die Zeitplanungsinformationen off-line auf der Basis von Übermittlungsanforderungen bestimmt werden, die aus den Ausführungseigenschaften wenigstens eines Prozesses (7A-7D, 8A-8B, 9A) bestimmt werden, die mit jedem der Systemknoten (N1-N3) assoziiert sind, wobei der wenigstens eine Prozess (7A-7D, 8A-8B, 9A) dazu eingerichtet ist, wenigstens eine Datennachricht des Satzes von Datennachrichten bereitzustellen.

4. Netzwerk (1) nach Anspruch 3, bei dem das Avionikmodul (A1-A3) jedes Systemknotens (N1-N3) dazu eingerichtet ist, Datennachrichten des Satzes von Datennachrichten mit einer Vielzahl unterschiedlicher Periodenzeiten periodisch bereitzustellen, und die Dauer jeweils des wenigstens einen Übermittlungszeitrahmens auf der Basis der kürzesten Periodenzeit der Vielzahl unterschiedlicher Periodenzeiten vorgewählt wird.

5. Netzwerk nach Anspruch 1 bis 4, bei dem die Zeitplanungsinformationen derart konfiguriert sind, dass ein Zeitschlitz-Überlauf verhindert wird, wobei wenigstens eines der Datenpakete in dem Netzwerk für einer Vielzahl aufeinander folgender Zeitschlitze transportiert wird.

6. Netzwerk (1) nach einem der Ansprüche 1 bis 5, bei dem wenigstens ein Systemknoten (N1-N3) dazu eingerichtet ist, Synchronisationsdatenpakete zu den anderen Systemknoten (N1-N3) zu senden.

7. Netzwerk (1) nach einem der Ansprüche 1 bis 6, wobei das Netzwerk eine duale redundante geschaltete Ethernet-Netzwerktopologie umfasst und jeder der Systemknoten (N1-N3) dazu eingerichtet ist, Datenpakete entlang zweier unabhängiger Wege zu senden, die in dem Netzwerk (1) auf der Basis einer Vielzahl von Verkehrssteuereinrichtungen (SW2, SW3) ausgebildet sind.

8. Netzwerk (1) nach einem der Ansprüche 1 bis 7, bei dem die Sendesteuereinheit (20B, 20C) auf der physikalischen Schicht angeordnet ist, die Anforderungen des IEEE-802.3-Ethernet erfüllt.

9. Verfahren für die Steuerung von Sendungen in einem Avionik-Ethernet-Netzwerk (1), wobei das Verfahren folgende Schritte umfasst:

   - periodisches Bereitstellen eines Satzes von Datennachrichten, die jeweils einen Satz von Datenvariablen umfassen, die sich auf Avionikfunktionen beziehen,
   - Senden wenigstens einer Synchronisationsnachricht auf dem Sendemedium,
   - Erfassen des Beginns wenigstens eines sich periodisch wiederholenden Übermittlungszeitrahmens, der eine Vielzahl von Zeitschlitzen einer vorbestimmten Dauer umfasst, auf der Basis wenigstens einer Synchronisationsnachricht,

   **gekennzeichnet durch** folgende weitere Schritte in jedem Systemknoten (N1-N3):

   - Ausführen zeitlich geplanter Sendungen der Datenpakete auf der Basis von Zeitplanungsinformationen, die sich auf eine Zeitgabetabelle beziehen, die jedem aus der Vielzahl der Zeitschlitze (S1-S8) eine vorbestimmte Anzahl von Datenpaketen zuordnen, die jeweils einen vorbestimmten Teilsatz von Datennachrichten aus dem Satz von Datennachrichten umfassen, wobei es jedem Knoten (N1-N3) gestattet ist, Sendungen eines oder mehrerer Datenpakete während dieses Zeitschlitzes auszuführen.

10. Verfahren nach Anspruch 9, **gekennzeichnet durch** folgenden Schritt in jedem Systemknoten (N1-N3):

    - Ausführen eines zeitlich geplanten Abrufens der Datenpakete auf der Basis von Zeitplanungsinformationen, die sich auf eine Zeitgabetabelle beziehen, die jedem aus der Vielzahl von Zeitschlitzen (S1-S8) eine vorbestimmte Anzahl von Datenpaketen statisch zuteilt, die jeweils einen vorbestimmten Teilsatz von Datennachrichten aus dem Satz von Datennachrichten umfassen.

11. Verfahren nach Anspruch 10, **gekennzeichnet durch** den weiteren Schritt in jedem Systemknoten (N1-N3):

    - Senden der Datenpakete entlang zweier unabhängiger Wege, die in dem Netzwerk (1) ausgebildet sind, auf der Basis einer Vielzahl von Verkehrssteuereinrichtungen (SW2, SW3).

12. Verfahren nach Anspruch 11, **gekennzeichnet durch** folgenden Schritt in jedem Systemknoten (N1-N3):

    - Filtern der Datenpakete, die über die beiden unabhängigen Wege empfangen werden, um eine korrekte Kopie jedes der Datenpakete abzurufen.

13. Computerprogramm, umfassend einen Programmcode für die Ausführung der Verfahrensschritte nach einem der Ansprüche 9 bis 12, wenn das Computerprogramm auf einem Computer läuft.

14. Computerprogrammerzeugnis, das auf einem von einem Computer lesbaren Medium gespeichert ist, um die Verfahrensschritte nach einem der Ansprüche 9 bis 12 auszuführen, wenn das Computerprogramm auf dem Computer läuft.

15. Computerprogrammerzeugnis, das direkt in einem internen Speicher eines Computers gespeichert werden kann, umfassend ein Computerprogramm zum Ausführen der Verfahrensschritte nach einem der Ansprüche 9 bis 12, wenn das Computerprogramm auf dem Computer läuft.


**Revendications**

1. Réseau Ethernet commuté d'avionique (1), pour la communication de données, le réseau comprenant :

   - une pluralité de noeuds système interconnectés synchronisés (N1-N3) comprenant chacun :

     - un module avionique (A1-A3) conçu pour fournir périodiquement un ensemble de messages de données, chacun d'eux comprenant un ensemble de variables de données relatives à des fonctions d'avionique,
     - un module réseau (E1-E3) couplant le module avionique (A1-A3) au réseau (1), ledit module réseau (E1-E3) comprenant une unité d'interface réseau (15A-15C) conçue pour fournir des moyens pour des transmissions de paquets de données comprenant un certain nombre de messages de données dudit ensemble de messages de données provenant dudit module avionique (A1-A3),

dans lequel le module réseau (E1-E3) de chaque noeud système (N1-N3) comprend une unité de commande de transmission conçue pour commander à l'unité d'interface réseau (15A-15C) d'effectuer des transmissions programmées desdits paquets de données, ladite unité de commande de transmission ayant accès à des moyens de mémoire comprenant des informations de programmation relatives à une table de synchronisation comprenant une pluralité de créneaux temporels (S1-S8) de durée prédéterminée à l'intérieur d'au moins une trame temporelle de communication à répétition périodique (125-128), **caractérisé en ce qu'**à chacun des créneaux temporels de ladite pluralité de créneaux temporels (S1-S8) est affecté de manière statique un nombre prédéterminé de paquets de données, chacun d'eux comprenant un sous-ensemble prédéterminé de messages de données provenant dudit ensemble de messages de données, chaque noeud (N1-N3) étant autorisé à effectuer des transmissions d'un ou plusieurs paquets de données pendant le créneau temporel en question.

2. Réseau (1) selon la revendication 1, dans lequel les informations de programmation sont fonction de contraintes déterminées de retard de communication de bout en bout associées à la communication des messages de données entre des processus affectés à différents noeuds système (N1-N3).

3. Réseau (1) selon les revendications 1 ou 2, dans lequel les informations de programmation sont déterminées hors ligne sur la base d'exigences de communication, déterminées à partir des caractéristiques d'exécution d'au moins un processus (7A-7D, 8A-8B, 9A) associé à chacun des noeuds système (N1-N3), ledit au moins un processus (7A-7D, 8A-8B, 9A) étant conçu pour fournir périodiquement au moins un message de données dudit ensemble de messages de données.

4. Réseau (1) selon la revendication 3, dans lequel le module avionique (A1-A3) de chaque noeud système (N1-N3) est conçu pour fournir périodiquement des messages de données de l'ensemble de messages de données à une pluralité de périodes différentes et dans lequel la durée de chacune des trames temporelles de communication est présélectionnée en fonction de la période la plus courte de la pluralité de périodes différentes.

5. Réseau selon les revendications 1 à 4, dans lequel les informations de programmation sont configurées de manière à empêcher un dépassement de créneau temporel dans lequel au moins un des paquets de données est transporté sur le réseau pendant une pluralité de créneaux temporels consécutifs.

6. Réseau (1) selon l'une quelconque des revendications 1 à 5, dans lequel au moins un noeud système (N1-N3) est conçu pour transmettre des paquets de données de synchronisation aux autres noeuds système (N1-N3).

7. Réseau (1) selon l'une quelconque des revendications 1 à 6, dans lequel le réseau (1) comprend une topologie de réseau Ethernet commuté redondant et chacun des noeuds système (N1-N3) est conçu pour transmettre des paquets de données le long de deux chemins indépendants formés dans le réseau (1) sur la base d'une pluralité de moyens de régulation du trafic (SW2, SW3).

8. Réseau (1) selon l'une quelconque des revendications 1 à 7, dans lequel l'unité de commande de transmission (20B, 20C) est agencée au-dessus d'une couche physique conforme à la norme Ethernet IEEE 802.3.

9. Procédé de régulation des transmissions dans un réseau Ethernet avionique (1), le procédé comprenant les étapes suivantes :

- la fourniture périodique d'un ensemble de messages de données, chacun d'eux comprenant un ensemble de variables de données relatives à des fonctions d'avionique,
- la transmission d'au moins un message de synchronisation sur le support de transmission,
- la détection du début d'au moins une trame temporelle de communication à répétition périodique comprenant une pluralité de créneaux temporels de durée prédéterminée, sur la base de l'au moins un message de synchronisation, **caractérisé en ce qu'**il comprend l'étape supplémentaire qui consiste, dans chaque noeud système (N1-N3), à :
- effectuer des transmissions programmées desdits paquets de données, en fonction d'informations de programmation relatives à une table de synchronisation affectant de manière statique à chaque créneau temporel de ladite pluralité de créneaux temporels (S1-S8) un nombre prédéterminé de paquets de données, chacun d'eux comprenant un sous-ensemble prédéterminé de messages de données provenant dudit ensemble de messages de données, dans lequel chaque noeud (N1-N3) est autorisé à effectuer des transmissions d'un ou plusieurs paquets de données pendant le créneau temporel en question.

**10.** Procédé selon la revendication 9, **caractérisé en ce qu'**il comprend l'étape qui consiste, dans chaque noeud système (N1-N3) , à :

- effectuer une extraction programmée des paquets de données en fonction d'informations de programmation relatives à une table de synchronisation affectant de manière statique à chaque créneau temporel de ladite pluralité de créneaux temporels (S1-S8) un nombre prédéterminé de paquets de données, chacun d'eux comprenant un sous-ensemble prédéterminé de messages de données provenant dudit ensemble de messages de données.

**11.** Procédé selon la revendication 10, **caractérisé en ce qu'**il comprend l'étape supplémentaire qui consiste, dans chaque noeud système (N1-N3), à :

- transmettre les paquets de données le long de deux chemins indépendants formés dans le réseau (1), sur la base d'une pluralité de moyens de régulation du trafic (SW2, SW3).

**12.** Procédé selon la revendication 11, **caractérisé en ce qu'**il comprend l'étape qui consiste, dans chaque noeud système (N1-N3) , à :

- filtrer les paquets de données reçus via les deux chemins indépendants afin d'extraire une copie correcte de chacun des paquets de données.

**13.** Programme informatique comprenant un code de programme permettant d'effectuer les étapes de procédé de l'une quelconque des revendications 9 à 12, lorsque ledit programme informatique est exécuté sur un ordinateur.

**14.** Produit-programme informatique stocké sur un support lisible par ordinateur et permettant d'effectuer les étapes de procédé de l'une quelconque des revendications 9 à 12, lorsque le programme informatique est exécuté sur l'ordinateur.

**15.** Produit-programme informatique pouvant être stocké directement dans la mémoire interne d'un ordinateur, comprenant un programme informatique permettant d'effectuer les étapes de procédé de l'une quelconque des revendications 9 à 12, lorsque le programme informatique est exécuté sur l'ordinateur.

# Fig. 1

# Fig. 2

# Fig. 3

# Fig. 4

# Fig. 5

START → PROVIDE DATA MESSAGES PERIODICALLY  S100

INIT

S110  SYNCHRONIZE

WRITE DATA TABLES  S90

DETECT TIME-SLOTS  S120

IDENTIFY A SUBSET OF DATA MESSAGES TO BE ALLOCATED INTO DATA PACKETS  S130

ALLOCATE IDENTIFIED SUBSET OF DATA MESSAGES INTO A PREDETERMINED NUMBER OF DATA PACKETS  S140

TRANSMIT DATA PACKETS ONTO THE NETWORK  S150

RETRIEVE DATA FROM RECEIVED DATA PACKETS  S160

END

**EP 2 583 419 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030115369 A1

- EP 1841138 A2